# FASCICULE DE BREVET EUROPEEN

(11) **EP 3 196 103 B1**
(45) Date de publication et mention de la délivrance du brevet: **29.12.2021**
(21) Numéro de dépôt: 17152890.4
(22) Date de dépôt: 24.01.2017
(51) Int. Cl.: B62D 25/08

(54) **DISPOSITIF DE FIXATION D'UNE TIGE D'AMORTISSEUR SUR UNE CAISSE DE VEHICULE AUTOMOBILE**
BEFESTIGUNGSVORRICHTUNG EINER STOSSDÄMPFERSTANGE AUF EINER KRAFTFAHRZEUGKAROSSERIE
DEVICE FOR ATTACHING A SHOCK-ABSORBER ROD TO A MOTOR VEHICLE BODY

(30) Priorité: 25.01.2016 FR 1650561
(43) Date de publication de la demande: 26.07.2017
(73) Titulaire: Renault s.a.s, 92100 Boulogne-Billancourt (FR)
(72) Inventeur: DELORD, CHRISTIAN, 78910 ORGERUS (FR)

(56) Documents cités:
- EP-A1- 2 857 289
- WO-A1-2015/124347
- DE-A1-102014 104 838
- US-A- 5 031 958
- US-A1- 2014 375 085

## Description

L'invention concerne un dispositif de fixation d'une tige d'amortisseur de suspension d'une roue avant de véhicule automobile.

Un tel dispositif est bien connu par l'homme du métier sous le nom de coupelle d'amortisseur avant. Cette pièce, qui sert de support de fixation de la tige d'amortisseur sur la caisse du véhicule automobile, présente une forme sensiblement circulaire et comprend un orifice central dans lequel la tige de l'amortisseur est fixée. En répartissant l'énergie absorbée par le système de suspension du véhicule, la tige de l'amortisseur exerce une certaine force sur le centre de la coupelle. Ces forces se répartissent sur les rebords de la coupelle et peuvent entraîner l'usure de celle-ci, au détriment du confort de roulage et de la sécurité. En particulier, une coupelle détériorée va venir dégrader le confort acoustique du véhicule. A cet égard, un paramètre acoustique important généralement requis par le cahier des charges concerne l'inertance acoustique, permettant de mesurer la raideur d'une source émettrice d'ondes sonores, qui s'exprime en N/m. En particulier, le cahier des charges exige une valeur minimale, par exemple fixée à 2.10⁷ N/m, pour l'inertance des coupelles d'amortisseur avant, dans chacune des directions X, Y et Z du véhicule, soit la direction longitudinale du véhicule, la direction transversale et la direction verticale. Or, le phénomène précité de détérioration de la coupelle d'amortisseur avant engendre une dégradation significative de son inertance, entraînant une nuisance acoustique importante.

Aussi, on cherche classiquement à renforcer la coupelle d'amortisseur avant, notamment en augmentant son épaisseur. Toutefois, cette solution se fait au détriment de la masse, ce qui n'est pas souhaitable.

Le document EP 2857289 A1 décrit un dispositif de fixation d'une tige d'amortisseur de suspension d'une roue avant de véhicule automobile.

L'invention a pour but d'éviter ces inconvénients et d'offrir une solution alternative en proposant un dispositif de fixation optimisé et, en particulier, qui permette d'améliorer le rapport raideur/masse par rapport aux solutions connues.

A cet effet, l'invention a pour objet un dispositif de fixation d'une tige d'amortisseur de suspension d'une roue avant d'un véhicule automobile, ledit dispositif de fixation comprenant un élément de structure de forme cylindrique présentant un côté de fixation destiné à être fixé à une paroi latérale verticale délimitant un structure supérieure avant de caisse dudit véhicule automobile, ledit élément de structure présentant une ouverture axiale destinée à être traversée par ladite tige d'amortisseur, ledit dispositif étant caractérisé en ce qu'il comprend une surface d'accostage sensiblement plane préservée sur la surface externe dudit élément de structure et s'étendant radialement autour de ladite ouverture axiale, ladite surface d'accostage étant prolongée du côté opposé audit côté de fixation par trois pans inclinés étant constitués de surfaces planes inclinées par rapport à un plan horizontal, en continuité desquelles est formé un bord tombé à la périphérie dudit élément de structure, ladite surface d'accostage étant délimitée latéralement par des nervures orientées dans la direction transversale du véhicule lorsque ledit élément de structure est fixé à ladite paroi verticale, le bord tombé délimitant le côté ouvert de l'élément de structure.

Cet agencement du dispositif de fixation qui repose essentiellement sur une mise en forme particulière de celui-ci permet avantageusement d'augmenter la raideur du dispositif de fixation dans les trois axes XYZ, correspondant aux directions longitudinale, transversale et verticale du véhicule. Ce gain en raideur du dispositif de fixation est en outre avantageusement procuré en limitant l'apport de masse.

De préférence, lesdites nervures sont constituées par des plans verticaux faisant saillie d'une surface plane formée sur la surface externe dudit élément de structure entre les trois pans inclinés et ledit côté de fixation, à un niveau décalé axialement vers le bas par rapport à ladite surface d'accostage.

Avantageusement, les trois pans inclinés forment un angle compris entre 30°et 50°les uns par rapport aux autres.

De préférence, lesdits pans inclinés sont constituées de surfaces planes inclinées à un angle compris entre 40 et 50°par ra pport à un plan horizontal.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue schématique en perspective illustrant l'implantation du dispositif de fixation selon l'invention au niveau d'une structure supérieure avant de caisse de véhicule automobile,
- la Figure 2 est une illustration schématique du dispositif de fixation selon l'invention isolé de son environnement.

Ces Figures sont représentées selon des orientations définies par les axes X, Y et Z correspondant respectivement aux directions longitudinale, transversale et verticale du véhicule.

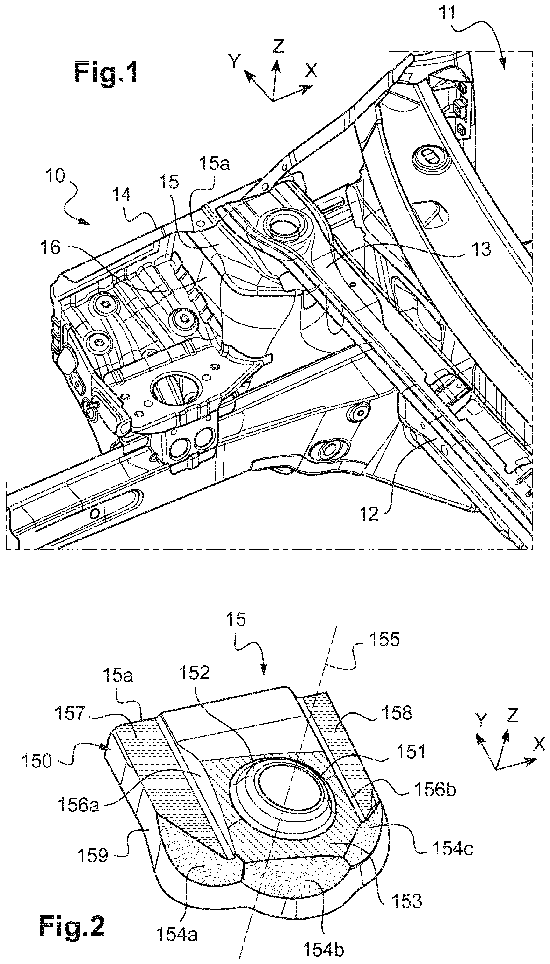

En référence à la figure 1, est représentée une structure supérieure avant de caisse 10 de véhicule automobile agencée en avant d'une cellule rigide 11, formant un habitacle du véhicule automobile, fermé par un pare-brise non représenté. La structure supérieure avant 10 comporte une cloison de chauffage transversale 12 sensiblement verticale, qui s'interpose entre la structure supérieure avant de caisse 10 et la cellule 11 et qui est agencé au voisinage d'une paroi latérale verticale 14, délimitant la structure supérieure avant de caisse 10 et destinée à former support pour l'aile avant droite du véhicule.

La structure supérieure avant de caisse 10 comporte aussi, en avant et à proximité immédiate de la cloison de chauffage 12, une coupelle d'amortisseur avant 15, formant le dispositif de fixation de l'invention, qui présente un côté de fixation 15a monté solidaire de la paroi latérale 14 et qui est portée par une rehausse de coupelle d'amortisseur avant 16, adjacente à la face intérieure de la paroi latérale 14. La coupelle d'amortisseur avant 15 est en outre liée à une traverse de cloison de chauffage 13, qui s'étend transversalement à la cloison de chauffage 12.

Conformément à l'invention, et comme il va être expliqué plus en détail en référence à la figure 2, la coupelle d'amortisseur avant 15 présente une forme optimisée propre à permettre de maximiser sa raideur.

La coupelle d'amortisseur avant 15 est constituée d'un élément de structure 150 de forme générale cylindrique, ouvert à sa base. L'élément de structure 150 est munie d'une ouverture axiale 151, qui débouche dans une portion en saillie 152 d'une surface sensiblement plane 153, préservée sur la surface externe de l'élément de structure 150 et qui s'étend radialement autour de cette ouverture axiale 151. La surface sensiblement plane 153, dite surface d'accostage, permet ainsi de constituer une zone d'accostage permettant de réaliser les liaisons nécessaires, par exemple par points de soudure, avec les pièces environnantes, en particulier ici la traverse de cloison de chauffage 13 conformément à l'exemple d'implantation représenté à la figure 1. Concernant la surface d'accostage 153, par sensiblement plane, on entend une surface qui peut être soit plane soit légèrement bombée de grand rayon de courbure, dans le plan perpendiculaire à la surface.

La surface d'accostage 153 est prolongée, du côté opposé au côté de fixation 15a de la coupelle d'amortisseur avant 15, par trois pans inclinés 154a, 154b, 154c, en direction de l'axe 155 de l'élément de structure 150. Il s'agit plus précisément de trois surfaces planes inclinées d'un angle préférentiellement compris entre 40° et 50° par rapport au plan horizontal, soit par rapport au plan (X, Y), i.e. le plan perpendiculaire à la direction verticale Z du véhicule, ces trois surfaces planes inclinées 154a, 154b et 154c formant également un angle entre elles et, préférentiellement, forment un angle compris entre 30° et 50° les unes par rapport aux autres. Ces trois pans inclinés 154a, 154b et 154c de la coupelle d'amortisseur avant 15, s'étendant à l'opposé du côté de fixation 15a de cette dernière, sont donc disposés côté coffre moteur lorsque la coupelle 15 est fixée à la paroi latérale 14, et permettent avantageusement d'augmenter la raideur de la coupelle suivant les trois axes X, Y et Z du véhicule.

Toujours conformément à l'invention, la surface d'accostage 153 est délimitée latéralement de chaque côté par des nervures 156a, 156b orientées dans la direction transversale Y du véhicule lorsque l'élément de structure 150 est fixé à la paroi latérale 14. Chaque nervure 156a, 156b est formé par un plan vertical, soit un plan s'étendant dans le plan (Y, Z), i.e. dans le plan perpendiculaire à la direction longitudinale du véhicule, qui fait saillie d'une surface plane 157, 158 formée sur la surface externe de l'élément de structure 150, de part et d'autre de la surface d'accostage 153, entre les trois pans inclinés 154a, 154b et 154c et le côté de fixation 15a de la coupelle 15, à un niveau décalé axialement (suivant l'axe Z), préférentiellement vers le bas, par rapport à la surface d'accostage 153. Ces nervures 156, 157 orientées suivant l'axe Y permettent avantageusement d'augmenter la raideur de la coupelle d'amortisseur avant 15, en particulier par rapport à la paroi latérale 14 à laquelle elle est fixée.

L'élément de structure 150 constituant la coupelle d'amortisseur avant 15 comporte en outre à sa périphérie, un bord tombé 159 formant une continuité des surfaces planes 157, 158 et des trois pans inclinés 154a, 154b, et 154c et délimitant le côté ouvert de l'élément de structure 150.

La forme ainsi optimisée de la coupelle d'amortisseur avant 15 permet d'améliorer l'inertance acoustique de la coupelle, en augmentant la raideur de celle-ci dans les trois axes X, Y et Z, sans préjudice par rapport à sa masse.

## Revendications

1. Dispositif de fixation (15) d'une tige d'amortisseur de suspension d'une roue avant d'un véhicule automobile, ledit dispositif de fixation comprenant un élément de structure (150) de forme cylindrique présentant un côté de fixation (15a) destiné à être fixé à une paroi latérale verticale (14) délimitant un structure supérieure avant de caisse (10) dudit véhicule automobile, ledit élément de structure (150) présentant une ouverture axiale (151) destinée à être traversée par ladite tige d'amortisseur, ledit dispositif étant **caractérisé en ce qu'**il comprend une surface d'accostage (153) sensiblement plane préservée sur la surface externe dudit élément de structure et s'étendant radialement autour de ladite ouverture axiale (151), ladite surface d'accostage (153) étant prolongée du côté opposé audit côté de fixation (15a) par trois pans inclinés (154a, 154b, 154c) en direction de l'axe (155) dudit élément de structure, lesdits trois pans inclinés étant constitués de surfaces planes inclinées par rapport à un plan horizontal, en continuité desquelles est formé un bord tombé (159) à la périphérie dudit élément de structure, ladite surface d'accostage (153) étant délimitée latéralement par des nervures (156a, 156b) orientées dans la direction transversale du véhicule lorsque ledit élément de structure est fixé à ladite paroi latérale verticale, le bord tombé (159) délimitant le côté ouvert de l'élément de structure (150).

2. Dispositif selon la revendication 1, **caractérisé en ce que** lesdites nervures (156a, 156b) sont constituées par des plans verticaux faisant saillie d'une surface plane (157, 158) formée sur la surface externe dudit élément de structure entre lesdits trois pans inclinés (154a, 154b, 154c) et ledit côté de fixation (15a), à un niveau décalé axialement vers le bas par rapport à ladite surface d'accostage (153).

3. Dispositif selon la revendication 1 ou 2, **caractérisé en ce que** les trois pans inclinés (154a, 154b, 154c) forment un angle compris entre 30° et 50° les uns par rapport aux autres.

4. Dispositif selon l'une quelconque des revendications précédentes, **caractérisé en ce que** lesdits pans inclinés (154a, 154b, 154c) sont constituées de surfaces planes inclinées à un angle compris entre 40° et 50° par rapport à un plan horizontal.

## Patentansprüche

1. Vorrichtung (15) zur Befestigung einer Aufhängungsdämpferstange eines Vorderrads eines Kraftfahrzeugs, wobei die Befestigungsvorrichtung ein zylindrisches Strukturelement (150) umfasst, das eine Befestigungsseite (15a) aufweist, die dazu bestimmt ist, an einer vertikalen Seitenwand (14) befestigt zu werden, die eine obere Karosserievorderstruktur (10) des Kraftfahrzeugs begrenzt, wobei das Strukturelement (150) eine axiale Öffnung (151) aufweist, die dazu bestimmt ist, von der Dämpferstange durchquert zu werden, wobei die Vorrichtung **dadurch gekennzeichnet ist, dass** sie eine im Wesentlichen ebene Anstoßfläche (153) umfasst, die an der Außenfläche des Strukturelements vorbehalten ist und sich radial um die axiale Öffnung (151) erstreckt, wobei die Anstoßfläche (153) an der der Befestigungsseite (15a) gegenüberliegenden Seite durch drei in Richtung der Achse (155) des Strukturelements verlaufende Schrägen (154a, 154b, 154c) verlängert ist, wobei die drei Schrägen aus ebenen Flächen bestehen, die bezüglich einer horizontalen Ebene geneigt sind und in deren Fortsetzung ein abfallender Rand (159) am Umfang des Strukturelements ausgebildet ist, wobei die Anstoßfläche (153) seitlich durch Rippen (156a, 156b) begrenzt ist, die in der Querrichtung des Fahrzeugs ausgerichtet sind, wenn das Strukturelement an der vertikalen Seitenwand befestigt ist, wobei der abfallende Rand (159) die offene Seite des Strukturelements (150) begrenzt.

2. Vorrichtung nach Anspruch 1, **dadurch gekennzeichnet, dass** die Rippen (156a, 156b) aus vertikalen Ebenen bestehen, die von einer ebenen Fläche (157, 158) vorragen, die auf der Außenfläche des Strukturelements zwischen den drei Schrägen (154a, 154b, 154c) und der Befestigungsseite (15a) auf einer bezüglich der Anstoßfläche (153) axial nach unten versetzten Höhe ausgebildet ist.

3. Vorrichtung nach Anspruch 1 oder 2, **dadurch gekennzeichnet, dass** die drei Schrägen (154a, 154b, 154c) einen Winkel zwischen 30° und 50° bezüglich einander bilden.

4. Vorrichtung nach einem der vorhergehenden Ansprüche, **dadurch gekennzeichnet, dass** die Schrägen (154a, 154b, 154c) aus ebenen Flächen bestehen, die in einem Winkel zwischen 40° und 50° bezüglich einer horizontalen Ebene geneigt sind.

## Claims

1. Device (15) for fastening a suspension shock absorber rod of a front wheel of a motor vehicle, said fastening device comprising a structural element (150) of cylindrical shape having a fastening side (15a) intended to be fastened to a vertical lateral wall (14) delimiting a front upper bodyshell structure (10) of said motor vehicle, said structural element (150) having an axial opening (151) intended to have said shock absorber rod passing through it, said device being **characterized in that** it comprises a substantially flat docking surface (153) preserved on the external surface of said structural element and extending radially around said axial opening (151), said docking surface (153) being extended on the side opposite said fastening side (15a) by three facets (154a, 154b, 154c) that are inclined in the direction of the axis (155) of said structural element, said three inclined facets being made up of flat surfaces that are inclined with respect to a horizontal plane, in the continuity of which surfaces is formed a dropped edge (159) at the periphery of said structural element, said docking surface (153) being delimited laterally by ribs (156a, 156b) that are oriented in the transverse direction of the vehicle when said structural element is fastened to said vertical lateral wall, the dropped edge (159) delimiting the open side of the structural element (150).

2. Device according to Claim 1, **characterized in that** said ribs (156a, 156b) are made up of vertical planes protruding from a flat surface (157, 158) that is formed on the external surface of said structural element between said three inclined facets (154a, 154b, 154c) and said fastening side (15a), at a level that is offset axially downwards with respect to said docking surface (153) .

3. Device according to Claim 1 or 2, **characterized in that** the three inclined facets (154a, 154b, 154c) form an angle of between 30° and 50° with respect to one another.

4. Device according to any one of the preceding claims, **characterized in that** said inclined facets (154a, 154b, 154c) are made up of flat surfaces that are inclined by an angle of between 40° and 50° with respect to a horizontal plane.
